# EUROPEAN PATENT SPECIFICATION

(11) **EP 4 364 063 B1**
(45) Date of publication and mention of the grant of the patent: **19.11.2025**
(21) Application number: 22741446.3
(22) Date of filing: 27.06.2022
(51) Int. Cl.: G06Q 10/02, G06Q 10/06, G06Q 30/06, H04W 4/02, G07C 9/00, G06Q 10/0631, G06Q 30/0645

(54) **RECORDING IDENTIFIER OF A UTILISED RESOURCE SPACE**
AUFZEICHNUNGSKENNUNG EINES BENUTZTEN BETRIEBSMITTELRAUMES
IDENTIFICATEUR D'ENREGISTREMENT D'UN ESPACE DE RESSOURCES UTILISÉ

(30) Priority: 29.06.2021 SE 2150831
(43) Date of publication of application: 08.05.2024
(73) Proprietor: Assa Abloy Limited, Willenhall, West Midlands WV13 3PW (GB)
(72) Inventor: WINNER, Duncan, MK46 5LA Olney (GB); HOLMAN, Monica, Bedford, Bedfordshire MK41 8NJ (GB); BISHOP, John, Concord, North Carolina 28025 (US)
(74) Representative: Kransell & Wennborg KB
(86) International application number: PCT/EP2022/067561
(87) International publication number: WO 2023/274957

(56) References cited:
- JP-A- 2006 285 658
- JP-A- 2020 064 509
- US-A1- 2012 143 657
- US-A1- 2014 232 569
- US-A1- 2016 189 324
- US-B1- 7 533 809
- US-B2- 9 652 918

## Description

### TECHNICAL FIELD

The present disclosure relates to the field of providing information on a utilised resource space and in particular to recording an identifier of a such a resource space.

### BACKGROUND

There are many types of shared resource spaces that are used by individuals from time to time. For instance, parking spaces is a resource space for vehicles. Other types of resource spaces are weapon lockers, laptop lockers or other lockers of individual or shared resources.

The key to access the resource (e.g. vehicle) or resource space (e.g. locker) can be deposited in an automated key cabinet. At a later point in time, the automated key cabinet can use proper authentication and authorization to control who is allowed to retrieve the key to access the resource in the resource space. When the key is deposited, the user enters an identifier of the resource space (e.g. parking bay identifier, locker identifier), to allow subsequent locating the space of the resource.

In the prior art, the input of the resource space is performed by the depositing user remembering or noting down the resource space identifier and, when depositing the key in an automated key cabinet, inputting the resource space identifier.

By relying on memory or scribbles, the input of resource space identifiers in the system is inconvenient and prone to errors.

US 2016/189324 A1 discloses parking guidance and parking services provided through wireless beacons. US 2014/232569 A1 discloses automatic identification of vehicle location. US 7 533 809 B1 discloses a system and a method for operating a parking facility. US 9 652 918 B2 discloses pairable secure-access facilities. JP 2006 285658 A discloses a locker network system.

### SUMMARY

One object is to improve how an identifier of a resource space, indicating location of a resource, are recorded.

According to a first aspect, it is provided a method for recording an identifier of a utilised resource space selected from a plurality of resource spaces. The method is performed by a user device. The method comprises: determining a location of the user device; presenting, on a display of the user device, a subset of resource spaces, based on the location of the user device; receiving user input indicating a selection of one resource space of the presented subset of resource spaces, wherein the selected one resource space corresponds to the utilised resource space; and providing data to an automated key cabinet, wherein the data comprises the identifier of the utilised resource space.

The resource space may be a parking bay within a parking area, in which case the utilised resource space is a parking bay in which a vehicle is parked.

In the providing data, the data may include at least one of an identifier of the user and an identifier of a resource in the utilised resource space.

The resource space may be a locker within a set of lockers, in which case the utilised resource space is a locker that the user has selected.

The presenting may comprise selecting the subset of resource spaces based on the location of the user device and an estimated accuracy of the determined location.

The determining a location of the user device may be based on a satellite-based localisation system.

According to a second aspect, it is provided a user device for recording an identifier of a utilised resource space selected from a plurality of resource spaces. The user device comprises: a processor; and a memory storing instructions that, when executed by the processor, cause the user device to: determine a location of the user device; present, on a display of the user device, a subset of resource spaces, based on the location of the user device; receive user input indicating a selection of one resource space of the presented subset of resource spaces, wherein the selected one resource space corresponds to the utilised resource space; and provide data to an automated key cabinet, wherein the data comprises the identifier of the utilised resource space..

The resource space may be a parking bay within a parking area, in which case the utilised resource space is a parking bay in which a vehicle is parked.

**In** the instructions to provide data, the data may include at least one of an identifier of the user and an identifier of a resource in the utilised resource space.

The resource space may be a locker within a set of lockers, in which case the utilised resource space is a locker that the user has selected.

The instructions to present may comprise instructions that, when executed by the processor, cause the user device to select the subset of parking bays based on the location of the user device and an estimated accuracy of the determined location.

The instructions to determine a location of the user device may be based on a satellite-based localisation system.

According to a third aspect, it is provided a computer program for recording an identifier of a utilised resource space selected from a plurality of resource spaces. The computer program comprises computer program code which, when executed on a user device causes the user device to: determine a location of the user device; present, on a display of the user device, a subset of resource spaces, based on the location of the user device; receive user input indicating a selection of one resource space of the presented subset of resource spaces, wherein the selected one resource space corresponds to the utilised resource space; and provide data to an automated key cabinet, wherein the data comprises the identifier of the utilised resource space.

According to a fourth aspect, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figs 1A-B are schematic diagrams illustrating environments in which embodiments presented herein can be applied;
Fig 2 is a flow chart illustrating embodiments of recording a utilised resource space selected from a plurality of resource spaces ;
Fig 3 is a schematic diagram illustrating components of the user device of Figs 1A-B; and
Fig 4 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

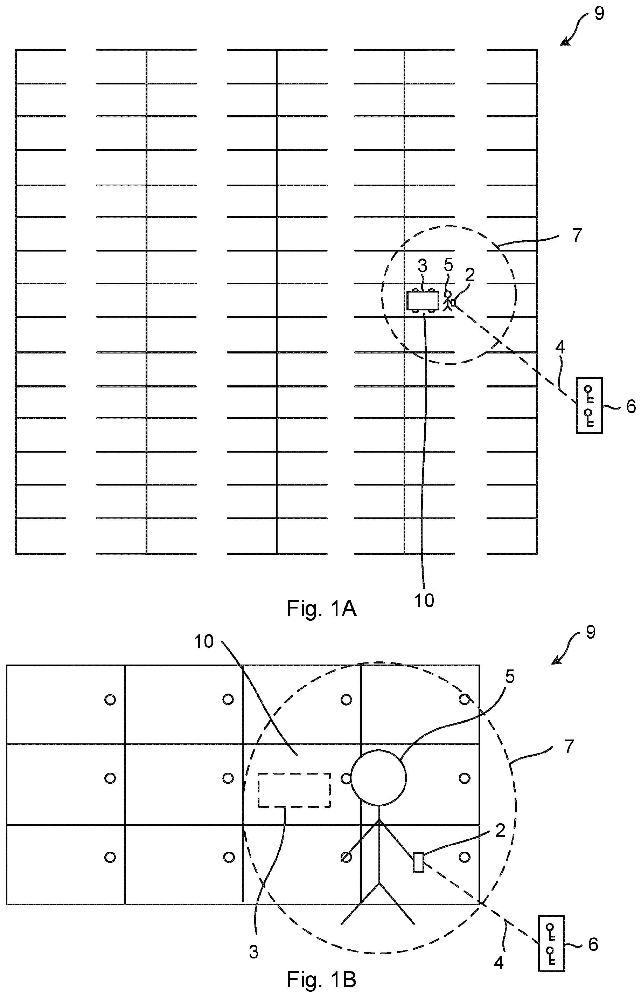

Figs 1A-B are schematic diagrams illustrating environments in which embodiments presented herein can be applied. The environment illustrated by Fig 1A is a parking area and the environment illustrated by Fig 1B is a set of lockers. First, the environment illustrated by Fig 1A will be described.

A set 9 of resource spaces in the form of a parking area is provided comprising a number of resource spaces parking bays, also known as parking spaces. The parking bays are indicated e.g. with paint on the ground of the parking area 9 and or physical features such as different types of stone laying. An identifier of each resource space (i.e. parking bay) is also indicated, e.g. as a number or alphanumeric sequence (string), that can be painted on the ground or be indicated on a sign or wall by the parking bay.

A user 5 has parked a resource 3 in the form of a vehicle in a specific resource space (parking bay) 10. The user 5 carries a user device 2. The user device 2 can be a smartphone, a tablet computer or a wearable device. In any case, the user device 2 provides a user interface for the user 5 and can communicate with an automated key cabinet 6 over a communication channel 4. The communication channel 4 can be based on any suitable wireless interface, e.g. using any one or more of Bluetooth or Bluetooth Low Energy (BLE), ZigBee, any of the IEEE 802.11x standards (also known as Wi-Fi). Optionally, the communication channel 4 occurs via a wide area network, such as the Internet, e.g. via Wi-Fi or a cellular network.

The automated key cabinet 6 provides convenient and secure deposit, storage and provisioning of physical keys, including vehicle keys or keys to resource spaces (e.g. lockers described below). The automated key cabinet 6 comprises electronic control that controls the physical parts of handling the physical keys as known in the art per se. The electronic key cabinet can control who gets access to what key based on suitable authorisation/authentication.

When the user 5 parks a vehicle 3 in the specific parking space 10, this needs to be recorded in the automated key cabinet 6 to allow another user to find the vehicle after retrieving the key for the vehicle 3. According to embodiments presented herein, the user 5 simply inputs the identifier of the resource space, i.e. parking bay, (found on the ground/sign/wall by the parking bay) into the user device, e.g. using an application (also known as app) executing on the user device. The user device 2 only presents on the screen possible parking bays (i.e. resource spaces) based on a location (e.g. determined using GPS or local radio beacons) of the user device 2. The possible parking bays (resource spaces) can be determined based on an estimated accuracy 7 of the location determination of the user device, which thus reflects the possible resource spaces that can have been chosen by the user based on the user location.

The user device 2 transmits the identifier of the utilised resource space 10, along with an identifier of the user 5 and/or the vehicle 3, to the automated key cabinet 6 over the communication channel 4.

The automated key cabinet 6 can then store the identifier of the utilised resource space 10 with an association to the vehicle 5. Optionally, the automated key cabinet 6 determines the identity of the vehicle 3 based on the identifier of the user 5 provided from the user device 2.

At this stage, the automated key cabinet 6 knows the identifier of the parking bay 10 in which the vehicle 5 is parked. When a new user checks out a key for the vehicle, this information is provided to the new user, allowing the user to conveniently find and access the vehicle 5.

Looking now to Fig 1B, this illustrates embodiments applied in a locker scenario. In this embodiment, the set 9 of resource spaces are in the form of a set of lockers. The user 5 here deposits one or more resources 3 in a selected locker 10. The set of lockers can be used to secure any type of resources, and can e.g. be in the form of weapon lockers, laptop lockers (e.g. for high-security computers), or changing room lockers (e.g. for a gym or workplace).

Upon the user 5 deposits one or more resources 3 in a selected locker 10, the user locks the locker and withdraws the physical key (not shown) from a lock for the selected resource space 10, either from a fixed lock of the selected resource space 10 or from a padlock used to secure the selected resource space 10. As explained above, the user 5 carries a user device 2 which is capable of communicating with the electronic key cabinet 6 over a communication channel 4.

In the same way as for the scenario illustrated by Fig 1A, the user 5 records the resource space identifier of the selected user space 10 in an application of the user device 2. The user device 2 communicates with the electronic key cabinet 6 over the communication channel 4 to record the resource space identifier of the selected user space 10 in the electronic key cabinet, in association with the user 5. The user 5 can then walk to the electronic key cabinet 6, which might not be in the immediate vicinity of the set 9of lockers, and deposit the key in the electronic key cabinet 6 without needing to remember identifier of the selected resource space 10 when depositing the key. **In** the same way as for the scenario illustrated by Fig 1A, the user device 2 only presents on the screen possible resource spaces based on a location (e.g. determined using GPS or local radio beacons) of the user device 2. The possible resource spaces can be determined based on an estimated accuracy 7 of the location determination of the user device 2.

When the key is later retrieved from the electronic key cabinet 6, by a user (a different or the same user that deposited the key), the identifier of the selected resource space 10 is provided to the user retrieving the key, allowing the selected resource space to be found.

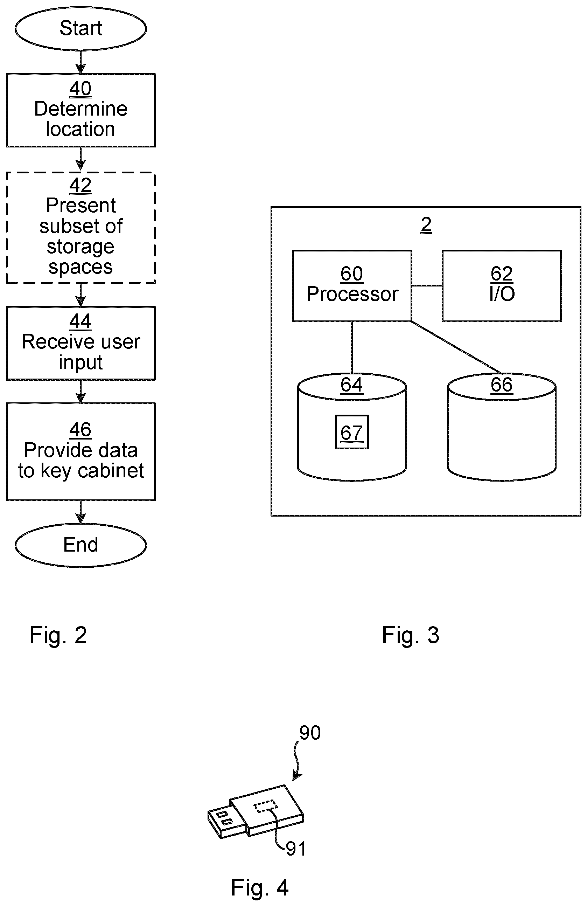

Fig 2 is a flow chart illustrating embodiments of recording an identifier of a utilised resource space selected from a plurality of resource spaces . The method is performed in a user device 2, e.g. the user device 2 in Figs 1A-B.

In a *determine location* step 40, the user device 2 determines a location of the user device. This can e.g. be based on a satellite-based localisation system, such as GPS (Global Positioning System) or based on local radio beacons (e.g. Bluetooth based beacons) that allow positioning in indoor spaces.

In a *present subset of resource spaces* step 42, the user device 2 presents, on a display of the user device 2, a subset of resource spaces (e.g. parking bays of the parking area or lockers), based on the location of the user device 2.

The subset of resource spaces is selected based on the location of the user device and an estimated accuracy 7 of the determined location. This reduces the number of possible identifiers of resource spaces. Based on the accuracy 7 of the location determination, only the possible resource spaces are presented to the user 5 and the user 5 conveniently selects the utilised resource space. For instance, in the parking space scenario, while GPS may not be sufficiently accurate to conclusively identify a particular bay identifier, in a large parking area, the significant reduction of number of potential bay identifiers makes the selection of bay identifier more convenient and less prone to errors.

It is to be noted that the location and the accuracy can also include an elevation component. The elevation is particularly useful in the case of multi-storey car parks, multi-storey showrooms or multi-level lockers (of one or more floors), where the subset thus also excludes resource spaces on levels that are outside the accuracy 7 in terms of the elevation component.

Optionally, the subset and/or the order in which resource spaces in the subset are presented is determined based on a machine-learning model. The machine-learning model can be trained using regular recording of what resource spaces are most frequently used, based on previously used resource spaces (or audit of vehicle locations for the parking space scenario), e.g. as determined according to embodiments presented herein.

In a *receive user input* step 44, the user device 2 receives user input indicating a selection of one resource space of the presented subset of resource spaces. The selected one resource space corresponds to the utilised resource space. This can be implemented by the user inputting the identifier of the parking bay using a virtual or physical keyboard/keypad of the user device 2 or by tapping on the screen where the identifier of the utilised resource space is displayed. Optionally, the user device only accepts input of resource spaces that are in the presented subset of identifiers. In other words, the user can use a touch screen of the user device 2 to point to the appropriate parking bay identifier.

In a *provide data to key cabinet* step 46, the user device 2 provides data to an automated key cabinet, wherein the data comprises the identifier of the utilised resource space. Optionally, the data further includes at least one of an identifier of the user and an identifier of the resource (e.g. vehicle or item(s) placed in the utilised resource space).

Using the embodiments presented herein, the user can conveniently input the resource space identifier at the time of when the resource is left (e.g. parking the vehicle or depositing a resource in a locker). By inputting the resource space identifier in the user device 2, the user 5 does not need to remember or separately note the resource space identifier and can instead input this data conveniently at the time that the resource space identifier can easily be seen.

This solution is cost efficient, since there is no need for advanced bay identifiers such as individual QR (Quick Response) codes or NFC (Near-Field Communication) tags by each parking bay, nor any need to administer such identifiers.

Fig 3 is a schematic diagram illustrating components of the user device 2 of Figs 1A-B. A processor 60 is provided using any combination of one or more of a suitable central processing unit (CPU), graphics processing unit (GPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 2 above.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The user device 2 further comprises an I/O interface 62 for communicating with external and/or internal entities. The I/O interface 62 also includes a user interface, e.g. including a touch screen and one or more physical buttons.

Other components of the user device 2 are omitted in order not to obscure the concepts presented herein.

Fig 4 shows one example of a computer program product 90 comprising computer readable means. On this computer readable means, a computer program 91 can be stored, which computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 3. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting.

## Claims

1. A method for recording an identifier of a utilised resource space selected from a plurality of resource spaces, the method being performed by a user device (2), the method comprising:
determining (40) a location of the user device;
presenting (42), on a display of the user device (2), a subset of resource spaces, based on the location of the user device;
**characterised in that** the method comprises:
receiving (44) user input indicating a selection of one resource space of the presented subset of resource spaces, wherein the selected one resource space corresponds to the utilised resource space; and
providing (46) data to an automated key cabinet (6), wherein the data comprises the identifier of the utilised resource space.

2. The method according to claim 1, wherein the resource space is a parking bay within a parking area (9), and wherein the utilised resource space is a parking bay in which a vehicle is parked.

3. The method according to claim 1 or 2, wherein, in the providing data, the data includes at least one of an identifier of the user and an identifier of a resource in the utilised resource space.

4. The method according to claim 1 or 2, wherein the resource space is a locker within a set of lockers (9), and wherein the utilised resource space is a locker that the user has selected.

5. The method according to any one of the preceding claims, wherein the presenting (42) comprises selecting the subset of resource spaces based on the location of the user device and an estimated accuracy of the determined location.

6. The method according to any one of the preceding claims, wherein the determining (40) a location of the user device is based on a satellite-based localisation system.

7. A user device (2) for recording an identifier of a utilised resource space selected from a plurality of resource spaces, the user device (2) comprising:
a processor (60); and
a memory (64) storing instructions (67) that, when executed by the processor, cause the user device (2) to:
determine a location of the user device;
present, on a display of the user device (2), a subset of resource spaces, based on the location of the user device;
**characterised in that** the instructions comprise instructions that, when executed by the processor, cause the user device (2) to:
receive user input indicating a selection of one resource space of the presented subset of resource spaces, wherein the selected one resource space corresponds to the utilised resource space; and
provide data to an automated key cabinet (6), wherein the data comprises the identifier of the utilised resource space.

8. The user device according to claim 7, wherein the resource space is a parking bay within a parking area (9), and wherein the utilised resource space is a parking bay in which a vehicle is parked.

9. The user device (2) according to claim 7 or 8, wherein, in the instructions to provide data, the data includes at least one of an identifier of the user and an identifier of a resource in the utilised resource space.

10. The user device (2) according to claim 7 or 8, wherein the resource space is a locker within a set of lockers (9), and wherein the utilised resource space is a locker that the user has selected.

11. The user device (2) according to any one of claims 7 to 10, wherein the instructions to present comprise instructions (67) that, when executed by the processor, cause the user device (2) to select the subset of parking bays based on the location of the user device and an estimated accuracy of the determined location.

12. The user device (2) according to any one of claims 7 to 11, wherein the instructions to determine a location of the user device is based on a satellite-based localisation system.

13. A computer program (67, 91) for recording an identifier of a utilised resource space selected from a plurality of resource spaces, the computer program comprising computer program code which, when executed on a user device (2) causes the user device (2) to:
determine a location of the user device;
present, on a display of the user device (2), a subset of resource spaces, based on the location of the user device;
**characterised in that** the computer program code comprises computer program code which causes the user device (1) to:
receive user input indicating a selection of one resource space of the presented subset of resource spaces, wherein the selected one resource space corresponds to the utilised resource space; and
provide data to an automated key cabinet (6), wherein the data comprises the identifier of the utilised resource space.

14. A computer program product (64, 90) comprising a computer program according to claim 13 and a computer readable means comprising non-transitory memory in which the computer program is stored.

## Patentansprüche

1. Verfahren zum Aufzeichnen einer Kennung eines genutzten Ressourcenraums, der aus einer Vielzahl von Ressourcenräumen ausgewählt wird, wobei das Verfahren von einer Benutzervorrichtung (2) durchgeführt wird, wobei das Verfahren umfasst:
Bestimmen (40) eines Standorts der Benutzervorrichtung;
Präsentieren (42) einer Teilmenge von Ressourcenräumen auf einem Display der Benutzervorrichtung (2) basierend auf dem Standort der Benutzervorrichtung;
**dadurch gekennzeichnet, dass** das Verfahren umfasst:
Empfangen (44) einer Benutzereingabe, die eine Auswahl eines Ressourcenraums aus der präsentierten Teilmenge von Ressourcenräumen angibt, wobei der ausgewählte Ressourcenraum dem genutzten Ressourcenraum entspricht; und
Bereitstellen (46) von Daten an einen automatisierten Schlüsselschrank (6), wobei die Daten die Kennung des genutzten Ressourcenraums umfassen.

2. Verfahren nach Anspruch 1, wobei der Ressourcenraum eine Parkbucht innerhalb eines Parkbereichs (9) ist und wobei der genutzte Ressourcenraum eine Parkbucht ist, in der ein Fahrzeug geparkt ist.

3. Verfahren nach Anspruch 1 oder 2, wobei die bereitgestellten Daten mindestens eine von einer Kennung des Benutzers und einer Kennung einer Ressource im genutzten Ressourcenraum beinhalten.

4. Verfahren nach Anspruch 1 oder 2, wobei der Ressourcenraum ein Schließfach innerhalb einer Reihe von Schließfächern (9) ist und wobei der genutzte Ressourcenraum ein Schließfach ist, das der Benutzer ausgewählt hat.

5. Verfahren nach einem der vorstehenden Ansprüche, wobei das Präsentieren (42) Auswählen der Teilmenge von Ressourcenräumen basierend auf dem Standort der Benutzervorrichtung und einer geschätzten Genauigkeit des bestimmten Standorts umfasst.

6. Verfahren nach einem der vorstehenden Ansprüche, wobei das Bestimmen (40) eines Standorts der Benutzervorrichtung auf einem satellitengestützten Lokalisierungssystem basiert.

7. Benutzervorrichtung (2) zum Aufzeichnen einer Kennung eines genutzten Ressourcenraums, der aus einer Vielzahl von Ressourcenräumen ausgewählt wurde, wobei die Benutzervorrichtung (2) umfasst:
einen Prozessor (60); und
einen Speicher (64), der Anweisungen (67) speichert, die, wenn sie vom Prozessor ausgeführt werden, die Benutzervorrichtung (2) veranlassen:
einen Standort der Benutzervorrichtung zu bestimmen;
auf einem Display der Benutzervorrichtung (2) eine Teilmenge von Ressourcenräumen basierend auf dem Standort der Benutzervorrichtung zu präsentieren;
**dadurch gekennzeichnet, dass** die Anweisungen Anweisungen umfassen, die bei Ausführung durch den Prozessor die Benutzervorrichtung (2) veranlassen:
eine Benutzereingabe zu empfangen, die eine Auswahl eines Ressourcenraums aus der präsentierten Teilmenge von Ressourcenräumen angibt, wobei der ausgewählte Ressourcenraum dem genutzten Ressourcenraum entspricht; und
Daten einem automatisierten Schlüsselschrank (6) bereitzustellen, wobei die Daten die Kennung des genutzten Ressourcenraums umfassen.

8. Benutzervorrichtung nach Anspruch 7, wobei der Ressourcenraum eine Parkbucht innerhalb eines Parkbereichs (9) ist und wobei der genutzte Ressourcenraum eine Parkbucht ist, in der ein Fahrzeug geparkt ist.

9. Benutzervorrichtung (2) nach Anspruch 7 oder 8, wobei in den Anweisungen zum Bereitstellen von Daten die Daten mindestens eine von einer Kennung des Benutzers und einer Kennung einer Ressource im genutzten Ressourcenraum beinhalten.

10. Benutzervorrichtung (2) nach Anspruch 7 oder 8, wobei der Ressourcenraum ein Schließfach innerhalb einer Reihe von Schließfächern (9) ist und wobei der genutzte Ressourcenraum ein Schließfach ist, das der Benutzer ausgewählt hat.

11. Benutzervorrichtung (2) nach einem der Ansprüche 7 bis 10, wobei die Anweisungen zum Präsentieren Anweisungen (67) umfassen, die bei Ausführung durch den Prozessor die Benutzervorrichtung (2) veranlassen, die Teilmenge von Parkbuchten basierend auf dem Standort der Benutzervorrichtung und einer geschätzten Genauigkeit des bestimmten Standorts auszuwählen.

12. Benutzervorrichtung (2) nach einem der Ansprüche 7 bis 11, wobei die Anweisungen zum Bestimmen eines Standorts der Benutzervorrichtung auf einem satellitengestützten Lokalisierungssystem basieren.

13. Computerprogramm (67, 91) zum Aufzeichnen einer Kennung eines genutzten Ressourcenraums, der aus einer Vielzahl von Ressourcenräumen ausgewählt wird, wobei das Computerprogramm Computerprogrammcode umfasst, der, wenn er auf einer Benutzervorrichtung (2) ausgeführt wird, das Benutzervorrichtung (2) veranlasst:
einen Standort der Benutzervorrichtung zu bestimmen;
auf einem Display der Benutzervorrichtung (2) eine Teilmenge von Ressourcenräumen basierend auf dem Standort der Benutzervorrichtung zu präsentieren;
**dadurch gekennzeichnet, dass** der Computerprogrammcode Computerprogrammcode umfasst, der die Benutzervorrichtung (1) veranlasst:
eine Benutzereingabe zu empfangen, die eine Auswahl eines Ressourcenraums aus der präsentierten Teilmenge von Ressourcenräumen angibt, wobei der ausgewählte Ressourcenraum dem genutzten Ressourcenraum entspricht; und
Daten einem automatisierten Schlüsselschrank (6) bereitzustellen, wobei die Daten die Kennung des genutzten Ressourcenraums umfassen.

14. Computerprogrammprodukt (64, 90), das ein Computerprogramm nach Anspruch 13 und ein computerlesbares Mittel umfasst, das einen nichtflüchtigen Speicher umfasst, auf dem das Computerprogramm gespeichert ist.

## Revendications

1. Procédé d'enregistrement d'un identifiant d'un espace de ressources utilisé sélectionné parmi une pluralité d'espaces de ressources, le procédé étant réalisé par un dispositif utilisateur (2), le procédé comprenant :
la détermination (40) d'un emplacement du dispositif utilisateur ;
la présentation (42), sur un écran du dispositif utilisateur (2), d'un sous-ensemble d'espaces de ressources, en fonction de l'emplacement du dispositif utilisateur ;
**caractérisé en ce que** le procédé comprend :
la réception (44) d'une entrée utilisateur indiquant une sélection d'un espace de ressources du sous-ensemble présenté d'espaces de ressources, dans lequel l'espace de ressources sélectionné correspond à l'espace de ressources utilisé ; et
la fourniture (46) de données à une armoire à clés automatisée (6), dans lequel les données comprennent l'identifiant de l'espace de ressources utilisé.

2. Procédé selon la revendication 1, dans lequel l'espace de ressources est une place de stationnement dans une zone de stationnement (9), et dans lequel l'espace de ressources utilisé est une place de stationnement dans laquelle un véhicule est stationné.

3. Procédé selon la revendication 1 ou 2, dans lequel dans la fourniture de données, les données incluent au moins un identifiant parmi un identifiant de l'utilisateur et un identifiant d'une ressource dans l'espace de ressources utilisé.

4. Procédé selon la revendication 1 ou 2, dans lequel l'espace de ressources est un casier dans un ensemble de casiers (9), et dans lequel l'espace de ressources utilisé est un casier que l'utilisateur a sélectionné.

5. Procédé selon l'une quelconque des revendications précédentes, dans lequel la présentation (42) comprend la sélection du sous-ensemble d'espaces de ressources en fonction de l'emplacement du dispositif utilisateur et d'une précision estimée de l'emplacement déterminé.

6. Procédé selon l'une quelconque des revendications précédentes, dans lequel la détermination (40) d'un emplacement du dispositif utilisateur est basée sur un système de localisation par satellite.

7. Dispositif utilisateur (2) permettant d'enregistrer un identifiant d'un espace de ressources utilisé sélectionné parmi une pluralité d'espaces de ressources, le dispositif utilisateur (2) comprenant :
un processeur (60) ; et
une mémoire (64) stockant des instructions (67) qui, lorsqu'elles sont exécutées par le processeur, amènent le dispositif utilisateur (2) à :
déterminer un emplacement du dispositif utilisateur ;
présenter, sur un écran du dispositif utilisateur (2), un sous-ensemble d'espaces de ressources, en fonction de l'emplacement du dispositif utilisateur ;
**caractérisé en ce que** les instructions comprennent des instructions qui, lorsqu'elles sont exécutées par le processeur, amènent le dispositif utilisateur (2) à :
recevoir une entrée utilisateur indiquant une sélection d'un espace de ressources du sous-ensemble présenté d'espaces de ressources, dans lequel l'espace de ressources sélectionné correspond à l'espace de ressources utilisé ; et
fournir des données à une armoire à clés automatisée (6), dans lequel les données comprennent l'identifiant de l'espace de ressources utilisé.

8. Dispositif utilisateur selon la revendication 7, dans lequel l'espace de ressources est une place de stationnement dans une zone de stationnement (9), et dans lequel l'espace de ressources utilisé est une place de stationnement dans laquelle un véhicule est stationné.

9. Dispositif utilisateur (2) selon la revendication 7 ou 8, dans lequel dans les instructions pour fournir des données, les données incluent au moins un identifiant parmi un identifiant de l'utilisateur et un identifiant d'une ressource dans l'espace de ressources utilisé.

10. Dispositif utilisateur (2) selon la revendication 7 ou 8, dans lequel l'espace de ressources est un casier dans un ensemble de casiers (9), et dans lequel l'espace de ressources utilisé est un casier que l'utilisateur a sélectionné.

11. Dispositif utilisateur (2) selon l'une quelconque des revendications 7 à 10, dans lequel les instructions à présenter comprennent des instructions (67) qui, lorsqu'elles sont exécutées par le processeur, amènent le dispositif utilisateur (2) à sélectionner le sous-ensemble de places de stationnement en fonction de l'emplacement du dispositif utilisateur et d'une précision estimée de l'emplacement déterminé.

12. Dispositif utilisateur (2) selon l'une quelconque des revendications 7 à 11, dans lequel les instructions pour déterminer un emplacement du dispositif utilisateur sont basées sur un système de localisation par satellite.

13. Programme informatique (67, 91) permettant d'enregistrer un identifiant d'un espace de ressources utilisé sélectionné parmi une pluralité d'espaces de ressources, le programme informatique comprenant un code de programme informatique qui, lorsqu'il est exécuté sur un dispositif utilisateur (2), amène le dispositif utilisateur (2) à :
déterminer un emplacement du dispositif utilisateur ;
présenter, sur un écran du dispositif utilisateur (2), un sous-ensemble d'espaces de ressources, en fonction de l'emplacement du dispositif utilisateur ;
**caractérisé en ce que** le code de programme informatique comprend un code de programme informatique qui amène le dispositif utilisateur (1) à :
recevoir une entrée utilisateur indiquant une sélection d'un espace de ressources du sous-ensemble présenté d'espaces de ressources, dans lequel l'espace de ressources sélectionné correspond à l'espace de ressources utilisé ; et
fournir des données à une armoire à clés automatisée (6), dans lequel les données comprennent l'identifiant de l'espace de ressources utilisé.

14. Produit de programme informatique (64, 90) comprenant un programme informatique selon la revendication 13 et un moyen lisible par ordinateur comprenant une mémoire non transitoire, dans laquelle le programme informatique est stocké.
